# EUROPÄISCHE PATENTANMELDUNG

(11) **EP 2 604 504 A2**
(43) Veröffentlichungstag der Anmeldung: **19.06.2013**
(21) Anmeldenummer: 12195395.4
(22) Anmeldetag: 04.12.2012
(51) Int. Cl.: B63G 8/00, B63H 5/16

(54) **Schutzgehäuse für einen Propeller eines Unterwasserfahrzeugs, Verbindungssystem mit einem Verbindungskabel und einem solchen Schutzgehäuse sowie Verwendung eines Schutzgehäuses zur Aufnahme eines Verbindungskabels**

(30) Priorität: 14.12.2011 DE 102011121103
(71) Anmelder: ATLAS ELEKTRONIK GmbH, 28309 Bremen (DE)
(72) Erfinder: Habisch, Heinz, 27299 Langwedel (DE); Kalwa, Jörg, 28844 Weyhe (DE); Stelke, Peter, 27412 Tarmstedt (DE)
(74) Vertreter: Lecomte & Partners

(57) **Zusammenfassung**

Die Erfindung betrifft ein Schutzgehäuse 10 für einen Propeller eines Unterwasserfahrzeugs. Die Erfindung betrifft außerdem ein Verbindungssystem für ein propellergetriebenes Unterwasserfahrzeug mit einem Verbindungskabel und einem solchen Schutzgehäuse. Ferner betrifft die Erfindung die Verwendung eines Schutzgehäuses 10 für einen Propeller eines Unterwasserfahrzeugs zur zugentlasteten Aufnahme eines Verbindungskabels 5.

Um mit geringen Herstellungskosten eine Verbindung zwischen einem propellergetriebenen Unterwasserfahrzeug und einer Trägerplattform mittels eines Verbindungskabels 5 zu ermöglichen, welche strömungsgünstig ist und eine zugentlastete Aufnahme des Verbindungskabels 5 gewährleistet, ist erfindungsgemäß an der außerhalb des vorgesehenen Arbeitsbereichs des Propellers 2 um eine Propellerachse 3 liegenden Peripherie des Schutzgehäuses 10 eine zugentlastende Kabelaufnahme 16 für ein Verbindungskabel 5 des Unterwasserfahrzeugs 1 angeordnet.

## Beschreibung

Die Erfindung betrifft ein Schutzgehäuse für einen Propeller eines Unterwasserfahrzeugs gemäß Anspruch 1. Die Erfindung betrifft außerdem gemäß Anspruch 12 ein Verbindungssystem für ein propellergetriebenes Unterwasserfahrzeug mit einem Verbindungskabel und einem solchen Schutzgehäuse. Die Erfindung betrifft ferner die Verwendung eines Schutzgehäuses für einen Propeller eines Unterwasserfahrzeugs zur zugentlasteten Aufnahme eines Verbindungskabels.

Bei propellergetriebenen Unterwasserfahrzeugen wird der Antriebspropeller am Heck des Unterwass erfahrzeugs in einem Schutzgehäuse angeordnet, welches den Propeller vor Beschädigungen, bspw. durch Treibgut, schützt. Für eine Vielzahl von Unterwassermissionen werden unbemannte propellergetriebene Unterwasserfahrzeuge eingesetzt, welche im Unterschied zu bemannten Unterwasserfahrzeugen größere Arbeitstiefen erreichen können und/oder in Umgebungen arbeiten, die zu gefährlich für Taucher oder die Besatzung bemannte Systeme sind. Unbemannte Unterwasserfahrzeuge können grob unterteilt werden in ferngelenkte Unterwasserfahrzeuge (ROV = Remotely Operated Vehicle) und autonome Unterwasserfahrzeuge (AUV = Autonomous Underwater Vehicle), wobei ferngesteuerte Unterwasserfahrzeuge (ROV) in der Regel über ein Verbindungskabel ferngesteuert werden. Die Steuerbefehle werden von einem Leitstand einer Systemplattform, bspw. einem Seeschiff, über das Verbindungskabel, vorgegeben.

Autonome Unterwasserfahrzeuge (AUV) erfüllen ihre jeweilige Mission ohne ständige Überwachung durch menschliche Bedienpersonen und folgen vielmehr einem vorgegebenen Missionsprogramm. Dabei sind autonome Unterwasserfahrzeuge bekannt, bei denen über ein Verbindungskabel eine Verbindung zur Systemplattform hergestellt wird. Ein solches hybrides AUV kann zusätzlich zur autonomen Steuerung über eine Glasfaserverbindung eine Datenübertragung von den Sensoren zur Systemplattform bereitstellen. Das Verbindungskabel kann über einen Stecker einer Steckverbindung an das Unterwasserfahrzeug angeschlossen werden.

Das Verbindungskabel wird üblicherweise am Heck des Unterwasserfahrzeugs angeschlossen, um eine störungsfreie Verbindung mit dem sich fortbewegenden Unterwasserfahrzeug und zudem einen möglichst geringen Strömungswiderstand des Unterwasserfahrzeugs zu gewährleisten.

Während der Mission des Unterwasserfahrzeugs verändert sich die Entfernung des Unterwasserfahrzeugs von der Systemplattform, so dass Zugbelastungen im Verbindungskabel auftreten können. Um zu vermeiden, dass aufgrund der Zugbelastungen im Verbindungskabel, die Steckverbindung zwischen dem Verbindungskabel und dem Unterwasserfahrzeug gelöst wird, d.h. der Stecker aus dem Unterwasserfahrzeug herausgezogen wird, werden üblicherweise Zugentlastungselemente eingesetzt. Bei bekannten Zugentlastungselementen wird das Verbindungskabel mehrfach um eine oder mehrere an der Struktur des Unterwasserfahrzeugs befestigte Trommeln gewickelt. Durch Reibung zwischen dem Verbindungskabel und den Trommeln des Zugentlastungselements wird das Verbindungskabel von dem Zugentlastungselement gehalten und der der Endabschnitt des Verbindungskabels zwischen der Zugentlastung und der Steckverbindung unter Schonung des empfindlichen Verbindungskabels entlastet und ein Herausziehen des Steckers verhindert.

Der Anschluss des Verbindungskabels unter Anordnung von Zugentlastungselementen an der Struktur des Fahrzeugs ist bei einem am Heck angeordneten Antriebspropeller aufwändig, da gerade die zum Kabelanschluss günstigen Bereiche am Heck wegen des dort angeordneten Propellers schwer zugänglich sind. Zudem erzeugen Zugentlastungselemente an der Struktur des Unterwasserfahrzeugs zusätzliche unerwünschte Strömungswiderstände.

Der vorliegenden Erfindung liegt daher das Problem zugrunde, bei geringen Herstellungskosten eine Verbindung zwischen einem propellergetriebenen Unterwasserfahrzeug und einer Trägerplattform mittels eines Verbindungskabels zu ermöglichen, welche strömungsgünstig ist und eine zugentlastete Aufnahme des Verbindungskabels gewährleistet.

Dieses Problem ist erfindungsgemäß durch ein Schutzgehäuse für einen Propeller eines Unterwasserfahrzeugs mit den Merkmalen des Anspruchs 1 gelöst. Das Problem ist des Weiteren durch ein Verbindungssystem für ein propellergetriebenes Unterwasserfahrzeug mit den Merkmalen des Anspruchs 12 gelöst. Ferner wird das Problem durch die Verwendung eines Schutzgehäuses für einen Propeller eines Unterwasserfahrzeugs zur Aufnahme eines Verbindungskabels an der Peripherie des Schutzgehäuses gelöst.

Erfindungsgemäß ist an der Peripherie des Schutzgehäuses eine zugentlastende Kabelaufnahme für ein Verbindungskabel des Unterwasserfahrzeugs angeordnet, wodurch das Schutzgehäuse als vorhandenes Bauteil für die Aufnahme des Verbindungskabels genutzt wird und dadurch die Anzahl der Bauteile, und damit die Fertigungskosten, reduziert sind. Die Peripherie des Schutzgehäuses sind dabei diejenigen Teile und Elemente des Schutzgehäuses, welche außerhalb des vorgesehenen Arbeitsbereichs des Propellers um eine Propellerachse liegen.

Die zugentlastende Kabelaufnahme ist ein Mittel zur derartigen Aufnahme eines Verbindungskabels, dass bei Zugbeanspruchung des Verbindungskabels auf der einen Seite der Kabelaufnahme auf den Abschnitt des Verbindungskabels auf der anderen Seite der Kabelaufnahme keine Zugkräfte wirken. Das Verbindungskabel ist in der Kabelaufnahme mit Kontakt montiert, so dass im Fall von Zugkräften im Verbindungskabel durch den Kontakt des Verbindungskabels mit der Kabelaufnahme Reibkräfte generiert werden, welche den Zugkräften entgegenstehen und diese kompensieren. Die Kabelaufnahme hält das Verbindungskabel axial fest, ohne es zu beschädigen. Der Endabschnitt des Verbindungskabels, welcher hinter der Kabelaufnahme an das Unterwasserfahrzeug angeschlossen wird, ist somit von der Wirkung von im übrigen Teil des Verbindungskabels wirkenden Zugkräften entlastet.

Im montierten Zustand liegt das Verbindungskabel an der Oberfläche des die Kabelaufnahme bildenden Bauteils am Umfang des Schutzgehäuses an. Bei Auftreten von Zugbeanspruchung des Verbindungskabels entstehen durch den Kontakt des Verbindungskabels und der Kabelaufnahme Reibungskräfte, welche das Verbindungskabel axial festhalten. Die Zugkräfte im Verbindungskabel werden im Bereich der Kabelaufnahme kompensiert, so dass auf den jenseits der Kabelaufnahme liegenden Endabschnitt des Verbindungskabels, welches den Stecker zum Anschluss an das Unterwasserfahrzeug trägt, keine Zugkräfte wirken.

Die Propellerachse ist dabei eine Längsachse des Schutzgehäuses, welche in Einbauposition des Schutzgehäuses mit der Drehachse des Propellers zusammenfällt. Die Erfindung hat erkannt, dass durch Verwendung des Schutzgehäuses zur zugentlasteten Aufnahme eines Verbindungskabels an der Peripherie des Schutzgehäuses die Anzahl der Bauteile reduziert werden kann. Die Peripherie des Schutzgehäuses bietet technisch bedingte Oberflächengestaltungen, welche mit geringem Aufwand für die Zugentlastung des Verbindungskabels verwendet werden können. Gerade in der Peripherie des Schutzgehäuses stehen nämlich Oberflächen zur Verfügung, an denen Verbindungskabel mit biegeempfindlichen Lichtwellenleitern mit unkritischen Biegeradien angelegt werden können, um den zur Zugentlastung des Verbindungskabels gewünschten Reibkontakt zu gewährleisten.

Durch die Anordnung des Verbindungskabels an der Peripherie des Schutzgehäuses kann das Verbindungskabel mit minimalem zusätzlichem Strömungswiderstand angeordnet werden und dabei gleichzeitig zugentlastet werden. Mit einem Verbindungskabel und einem Propeller-Schutzgehäuse, an dessen Peripherie eine Kabelaufnahme unter Berücksichtigung von Zugentlastung für das Verbindungskabel angeordnet ist, steht ein Verbindungssystem für ein propellergetriebenes Unterwasserfahrzeug zur Verfügung, welches mit einfachen Mitteln einen Anschluss von Verbindungskabeln, insbesondere Lichtwellenleiterkabeln, bei Fahrzeugen mit nur einem einzelnen Propeller am Heck gegeben ist. Die Erfindung ist dabei nicht auf Unterwasserfahrzeuge mit einzelnen Heckpropellern beschränkt, sondern stellt auch bei Unterwasserfahrzeugen mit mehreren Propellern durch Anordnung der zugentlastenden Kabelaufnahme an der Peripherie des Schutzgehäuses eine integrierte Lösung unter Verringerung der Bauteilzahl und damit Senkung der Fertigungskosten durch Nutzung des Propellerschutzes bereit.

In einer vorteilhaften Ausgestaltung der Erfindung umfasst die zugentlastende Kabelaufnahme einen trommelförmigen Gehäuseabschnitt des Schutzgehäuses, dessen Umfang zur Aufnahme wenigstens einer umlaufenden Wicklung des Verbindungskabels ausgebildet ist. Anstelle der Anordnung bekannter Zugentlastungsmittel mit Trommeln, auf die das Verbindungskabel zum Schutz der Steckverbindung gewickelt ist, wird der trommelförmige Gehäuseabschnitt des Schutzgehäuses für eine Aufwicklung des Verbindungskabels verwendet, um bei Auftreten von Zugkräften kompensierende Reibungskräfte in den Wicklungen zu generieren. Der trommelförmige Gehäuseabschnitt ist dabei ein Abschnitt des Schutzgehäuses in axialer Richtung der Propellerachse. Das Verbindungskabel wird bei der Montage mit ein bis fünf, vorzugsweise drei Wicklungen auf den trommelförmigen Gehäuseabschnitt gewickelt, um eine sichere Zugentlastung zu gewährleisten.

Vorteilhaft umfasst die Kabelaufnahme eine den trommelförmigen Gehäuseabschnitt wenigstens teilweise axial überdeckende Axialmanschette, welche an dem Schutzgehäuse für den Propeller befestigt ist. Zwischen der Axialmanschette und dem trommelförmigen Gehäuseabschnitt ist ein Zwischenraum gebildet, in dem im montierten Zustand des Verbindungssystems das Verbindungskabel aufgenommen und die umlaufenden Wicklungen des Verbindungskabels in ihrer Lage gesichert sind. Die auf den trommelförmigen Gehäuseabschnitt gelegten Wicklungen des Verbindungskabels erzeugen somit bei Zugbelastung des Verbindungskabels die zur Zugentlastung der Steckverbindung gewünschte Kraft durch Reibung.

Die Axialmanschette ist vorteilhaft über Klemmvorrichtungen an dem Umfang des Schutzgehäuses befestigt, so dass die Wicklungen in ihrer Lage festgehalten sind und Reibungskräfte in zweckdienlicher Größenordnung entstehen. Bevorzugt sind als Klemmeinrichtungen in das Schutzgehäuse einschraubbare Befestigungselemente, insbesondere Befestigungsschrauben, vorgesehen, welche in Durchgangsbohrungen in der Axialmanschette eingeführt und in das Schutzgehäuse zur Befestigung der Axialmanschette eingeschraubt werden.

In einer weiteren vorteilhaften Ausgestaltung der Erfindung umfasst das Schutzgehäuse eine stabförmige Kabelrute, welche im Wesentlichen parallel zur Propellerachse ausgerichtet an dem Schutzgehäuse angeordnet ist. Die Kabelrute ist durch eine feste oder lösbare Verbindung Teil der Peripherie des Schutzgehäuses. An der Kabelrute wird das Verbindungskabel derart befestigt und geführt, dass die Kabelrute das Verbindungskabel abseits des Propellers des Unterwasserfahrzeugs hält. Durch den Kontakt des Verbindungskabels mit der Kabelrute entstehen bei Zugbelastung des Verbindungskabels kompensierende Reibkräfte, so dass eine Zugentlastung der Steckverbindung am Ende des Verbindungskabels gegeben ist. Die Kabelrute wirkt somit als zugentlastende Kabelaufnahme. Um das Entstehen von Reibkräften zur Zugentlastung zu fördern, ist das Verbindungskabel vorteilhaft in spiralförmigen Schlaufen um die Kabelrute gelegt. Das Verbindungskabel wird dadurch bei Zugbelastung an die Kabelrute gezogen.

Die Kabelrute ist vorteilhaft biegeelastisch ausgebildet, wobei durch die elastischen Eigenschaften zum einen verhindert wird, dass das Verbindungskabel in den Propeller des Unterwasserfahrzeugs gerät, und zum anderen einem Abknicken des Verbindungskabels insbesondere am Ende der Kabelrute entgegengewirkt ist. Die Kabelrute besteht vorteilhaft aus einem glasfaserverstärkten Kunststoff.

In montiertem Zustand des Verbindungssystems ist das Verbindungskabel an der Kabelrute gehalten, so dass die Kabelrute Teil der Kabelaufnahme ist. In einer bevorzugten Ausführungsform der Erfindung ist die Kabelrute abschnittsweise von einem Schutzschlauch unter Ausbildung eines Zwischenraums zur Durchführung des Verbindungskabels umgeben. Das Verbindungskabel ist dabei zwischen der Kabelrute und dem Schutzschlauch durchgeführt und radial festgehalten, wobei die Kabelrute und der Schutzschlauch gemeinsam durch Reibung das Verbindungskabel axial festhalten und somit ein Zugentlastungsmittel für die Steckverbindung am Ende des Verbindungskabels bilden.

Die innerhalb des gemeinsamen Abschnitts von Kabelrute und Schutzschlauch befindliche Länge des Verbindungskabels ist größer als die axiale Länge dieses gemeinsamen Abschnitts von Kabelrute und Schutzschlauch. Dadurch wird das Verbindungskabel einerseits über Reibung sicher in der Kabelaufnahme zwischen dem Schutzschlauch und der Kabelrute gehalten und andererseits aufgrund des beschriebenen Längenüberschusses des Verbindungskabels sogar bei einem Überwinden der Reibungskräfte noch eine Zugentlastung der Steckverbindung des Verbindungskabel gewährleistet und einem Reißen des Verbindungskabels entgegengewirkt.

Vorteilhaft ist der Schutzschlauch als Spiralschlauch ausgebildet, welcher mit wenigen Handgriffen an der Kabelrute montiert werden kann. Dabei wird das Verbindungskabel eingeschlossen und der Spiralschlauch fest an die Kabelrute gedrückt, so dass genügend Kontakt und damit Reibung zwischen dem Verbindungskabel und der Kabelrute bzw. dem Spiralschlauch besteht. Der Schutzschlauch ist dabei vorteilhaft elastisch ausgebildet, so dass Bewegungen mit der Kabelrute möglich sind. In bevorzugter Ausgestaltung der Erfindung reicht der Schutzschlauch über ein freies Ende der Kabelrute hinaus, wodurch in diesem über die Kabelrute hinausreichenden Abschnitt ein zusätzlicher Schutz gegen unerwünschtes Abknicken des Verbindungskabels gegeben ist.

In einer weiteren vorteilhaften Ausführungsform der Erfindung sind am Umfang des Schutzgehäuses axiale Streben ausgebildet, welche mit einem auf Höhe der Propellerachse angeordneten Anschlussgehäuse verbunden sind, wobei wenigstens eine der Streben eine Kabelführung aufweist. Durch die Kabelführung in der Strebe kann das am Umfang des Schutzgehäuses aufgenommene Verbindungskabel definiert geführt und sicher montiert werden, wodurch das Verbindungskabel bzw. sein Stecker in einen strömungsgünstig zentral am Heck liegenden Anschluss des Unterwasserfahrzeugs geführt werden kann. Das Verbindungskabel ist dabei in der Kabelführung in der Strebe sicher verstaut.

Das Schutzgehäuse ist dabei vorteilhaft als Kort-Düse ausgebildet und weist an seinem innen liegenden Umfang einen konisch zulaufenden, tragflügelähnlich profilierten, Ring auf, welcher den Propeller umgibt, wodurch das Schutzgehäuse, neben seiner Funktion als Schutzvorrichtung gegen Beschädigungen des Propellers, auch zur Reduzierung der Strömungsverluste an den freien Enden der Propellerblätter beiträgt.

Weitere Merkmale der Erfindung ergeben sich aus den Unteransprüchen sowie aus den Ausführungsbeispielen, welche nachstehend anhand der Zeichnung näher erläutert sind. Es zeigen:
- Fig. 1: eine schematische Ansicht eines propellergetriebenen Unterwasserfahrzeugs, welches über ein Verbindungskabel mit einem Überwasserschiff verbunden ist, und
- Fig. 2: eine perspektivische Ansicht eines Schutzgehäuses für einen Propeller eines Unterwasserfahrzeugs mit montiertem Verbindungskabel.

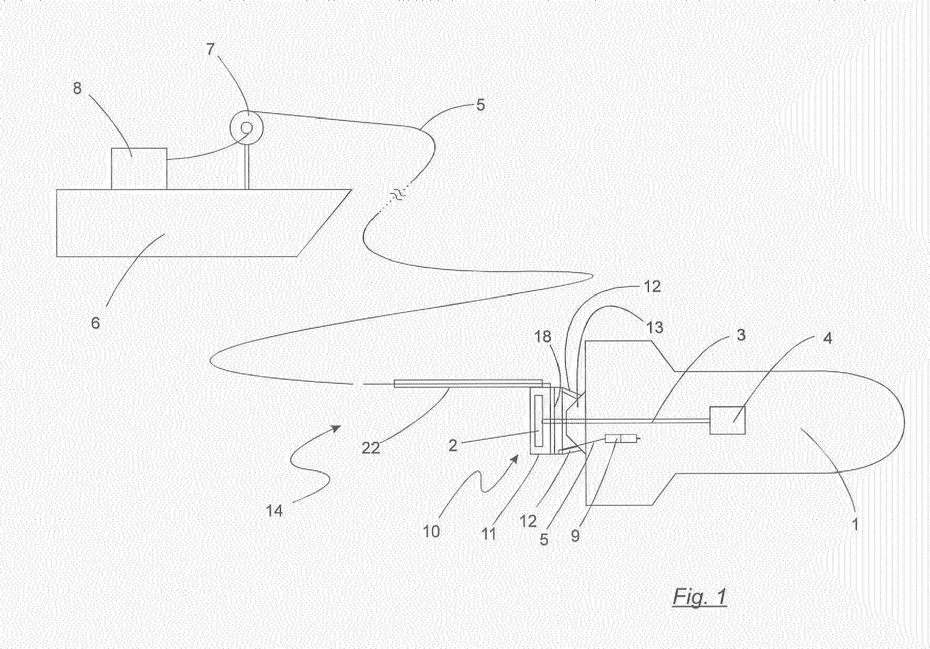

Fig. 1 zeigt ein unbemanntes Unterwasserfahrzeug 1, welches über einen am Heck des Unterwasserfahrzeugs angeordneten Propeller 2 angetrieben wird. Der Propeller 2 ist um eine Propellerachse 3 von einem innerhalb des Unterwasserfahrzeugs 1 angeordneten Antriebsmotor 4 drehbar.

Das Unterwasserfahrzeug 1 ist ein autonomes Unterwasserfahrzeug (AUV) und verfügt über Navigations- und Steuereinrichtungen zur autonomen Ausführung einer vorgegebenen Mission. Das Unterwasserfahrzeug ist über ein Verbindungskabel 5 mit einer Trägerplattform verbunden, welche im gezeigten Ausführungsbeispiel ein Überwasserschiff 6 ist. Anstelle eines Überwasserschiffs kann die Trägerplattform auch ein Leitstand an Land sein. Auf dem Überwasserschiff 6 ist eine Winde 7 angeordnet, von der das Verbindungskabel 5 abspulbar bzw. aufspulbar ist. Das Verbindungskabel 5 ist an Bord des Überwasserschiffs 6 mit einer Kontrolleinheit 8 verbunden.

Das Verbindungskabel 5 ist ein Lichtwellenleiterkabel, welches im gezeigten Ausführungsbeispiel zur Übertragung von Sensorinformationen des Unterwasserfahrzeugs 1 zur Kontrolleinheit 8 in Echtzeit dient. Alternativ oder zusätzlich können über das Verbindungskabel 5 Steuerinformationen zum Unterwasserfahrzeug 1 geleitet werden, um bedarfsweise in die laufende Mission einzugreifen.

Das Verbindungskabel 5 trägt an seinem freien Ende einen Stecker 9, welcher in eine dafür vorgesehene Steckerbuchse am Heck des Unterwasserfahrzeugs 1 eingesteckt werden kann, um eine signalübertragende Verbindung vom Unterwasserfahrzeug 1 zur Kontrolleinheit 8 der Trägerplattform zu schaffen.

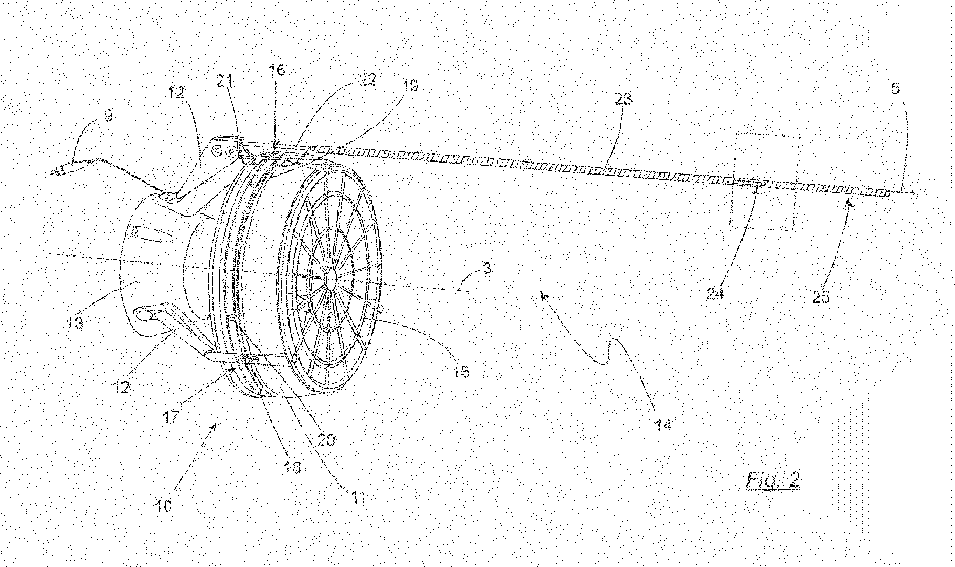

Der Propeller 2 des Unterwasserfahrzeugs 1 ist in einem als Kort-Düse ausgebildeten Schutzgehäuse 10 angeordnet, welches nachstehend anhand von Fig. 2 noch näher beschrieben ist. Das Schutzgehäuse 10 überdeckt mit einem an der Innenseite tragflügelartig profilierten Gehäusering 11 in axialer Richtung der Propellerachse 3 die Blattspitzen des Propellers 2 und verhindert dadurch zum einen eine Beschädigung des Propellers 2 und verringert außerdem Strömungsverluste an den Enden der Propellerblätter. An dem Gehäusering 11 des Schutzgehäuses 10, welcher wesentlicher Teil der Kort-Düse ist, sind axiale Streben 12 ausgebildet, welche mit einem zentral auf Höhe der Propellerachse 3 angeordneten Anschlussgehäuse 13 des Schutzgehäuses 10 verbunden sind. Im gezeigten Ausführungsbeispiel sind drei Streben 12 gleichmäßig am Umfang des Gehäusering 11 angeordnet, über welche das Anschlussgehäuse 13 den Gehäusering 11 zur Aufnahme des Propellers 2 trägt. Das Anschlussgehäuse 13 selbst ist konisch zulaufend ausgebildet, um die strömungsgünstigen Wirkungen der Kort-Düse zu begünstigen. Es ist so ausgebildet, dass es am Heck des Unterwasserfahrzeugs 1 befestigt werden kann.

Das Schutzgehäuse 10 und das Verbindungskabel 5 sind Teile eines Verbindungssystems 14, welches eine Verbindung zwischen dem Unterwasserfahrzeug 1 und der Trägerplattform (Überwasserschiff 6) mit einer strömungsgünstigen und zugentlasteten Aufnahme des Verbindungskabels 5 an dem Unterwasserfahrzeug 1 ermöglicht. Das Verbindungssystem 14 mit einem Schutzgehäuse 10 für den Propeller 2 und mit dem Verbindungskabel 5 ist nachstehend anhand von Fig. 2 näher erläutert. Für jeweils gleiche Merkmale sind dabei die gleichen Bezugszeichen wie in Fig. 1 verwendet.

Das Schutzgehäuse 10 ist im Wesentlichen rotationssymmetrisch zu einer Längsachse des Schutzgehäuses 10 ausgebildet, welche in eingebauter Lage mit der Propellerachse 3 zusammenfällt. Ein senkrecht zur Propellerachse 3 angeordnetes Schutzgitter 15 verschließt das Schutzgehäuse 10 und überdeckt in Einbaulage den Propeller.

An der Peripherie des Schutzgehäuses 10, das heißt radial außerhalb des vorgesehenen Arbeitsbereichs des Propellers 2 um die Propellerachse 3 liegend, ist eine zugentlastende Kabelaufnahme 16 angeordnet, welche ein Zugentlastungsmittel für das Verbindungskabel 5 bereitstellt. Die zugentlastende Kabelaufnahme 16 umfasst einen trommelförmig ausgebildeten Gehäuseabschnitt 17 des Schutzgehäuses 10, auf dessen Umfang das Verbindungskabel 5 abschnittsweise aufgewickelt und damit unter Entlastung des Steckers 9 von Zugkräften aufgenommen ist. Die Wicklungen 18 des Verbindungskabels 5 sind mit Kontakt zur Oberfläche des trommelförmig ausgebildeten Gehäuseabschnitts 17 aufgenommen, so dass bei Zugbeanspruchung des Verbindungskabels 5 kompensierende Reibungskräfte generiert werden.

Eine ausreichende Zugentlastung wird bei Anordnung von zum Beispiel drei Wicklungen 18 erreicht. Durch die Anordnung der Wicklungen 18 des Verbindungskabels 5 auf dem Umfang des trommelförmige ausgebildeten Gehäuseabschnitt ist eine zugentlastende Kabelaufnahme 16 an der Peripherie des Schutzgehäuses 10 gegeben, ohne dass weitere Bauteile zur Gewährleistung einer Zugentlastung erforderlich sind. Die Verwendung des Schutzgehäuses 10 für den Propeller 2 des Unterwasserfahrzeugs 1 zur Aufnahme des Verbindungskabels 5 auf dem trommelförmig ausgebildeten Gehäuseabschnitts 17 des Schutzgehäuses 10 ist eine integrierte Lösung zur zugentlasteten Aufnahme des Verbindungskabels, welche durch die Verwendung des ohnehin vorhandenen Schutzgehäuses 10 mit geringen Herstellungskosten realisierbar ist. Ferner wird der hydrodynamische Widerstand des Schutzgehäuses 10 durch die Anordnung der Kabelaufnahme an der Peripherie des Schutzgehäuses 10 nur unwesentlich beeinträchtigt.

Die Wicklungen 18 werden über eine den Trommelabschnitt 17 axial überdeckende Axialmanschette 19 gehalten und eingeklemmt, so dass die Wicklungen 18 in Einbaulage fixiert sind das Entstehen von Reibungskräften zwischen den Wicklungen 18 und den anliegenden Bauteilen bei Zugbeanspruchung des Verbindungskabels 5 sichergestellt ist. Die umlaufende Axialmanschette 19 ist mittels Befestigungsschrauben 20 an der Außenseite des Gehäuserings 11 und damit der Peripherie des Schutzgehäuses 10 montiert. Die Befestigungsschrauben 20 bilden dabei Klemmeinrichtungen zum Festklemmen der Wicklungen 18 des Verbindungskabels 5.

Nachdem das Verbindungskabel 5 bei der Montage des Verbindungssystems 14 auf den Trommelabschnitt 17 mit einer oder mehreren Wicklungen 18 aufgewickelt ist, wird die Axialmanschette 19 über die Wicklungen 18 gestreift und das Verbindungskabel 5 im Zwischenraum der Axialmanschette 19 und des Schutzgehäuses 10 festgeklemmt.

Durch die umlaufenden Wicklungen 18 ist eine dem Umfang des trommelförmigen Gehäuseabschnitts 17 entsprechende Länge des Verbindungskabels in Kontakt mit der Peripherie des Schutzgehäuses 10, so dass bei Zugbeanspruchung des Verbindungskabels genügend Reibung zur Kompensierung der Zugkräfte auftritt.

In wenigstens einer der Streben 12 ist eine Kabelführung 21 ausgebildet, durch die der Endabschnitt des Verbindungskabels 5 zum Stecker 9 geführt ist. Das Verbindungskabel 5 ist in der Kabelführung 21 sicher verstaut und vor der Wasserströmung im Betrieb des Unterwasserfahrzeugs geschützt. Über die Kabelführung 21 in der Strebe 12 wird das Verbindungskabel 5 definiert radial einwärts in die Nähe des Anschlussgehäuses 13 geführt. Der Stecker 9 kann somit auch in eine unmittelbar am Heck des Unterwasserfahrzeugs 1 angeordnete Anschlussvorrichtung eingesteckt werden, wobei freiliegende Kabelabschnitte des Verbindungskabels 5 vermieden sind. Die Kabelführung 21 ist dabei ein Kanal, welcher in der Strebe 12 als ausgesparte Nut oder als Bohrung ausgebildet ist.

In der Peripherie des Schutzgehäuses 10 ist eine stabförmige Kabelrute 22 an dem Schutzgehäuse 10 angeordnet, welche das Verbindungskabel 5 aufnimmt und führt. Die Kabelrute 22 ist im Wesentlichen parallel zur Propellerachse 3 ausgerichtet. Sie ist im gezeigten Ausführungsbeispiel etwa 50 cm lang und besteht aus einem glasfaserverstärkten Kunststoff. Die Kabelrute 22 ist an der Strebe 12 befestigt, welche in ihrer Kabelführung 21 den Endabschnitt des Verbindungskabels 5 mit dem Stecker 9 aufnimmt. Daher liegt nur ein sehr kurzer Abschnitt des Verbindungskabels 5 frei in dem Bereich zwischen den durch die Axialmanschette 19 eingeklemmten Wicklungen 18 und dem an der Kabelrute 22 aufgenommenen Abschnitt des Verbindungskabels 5.

Das Verbindungskabel 5 ist zwischen der Kabelrute 22 und einem Schutzschlauch 23 durchgeführt und radial festgehalten. Die Kabelrute 22 hält dadurch das Verbindungskabel 5 abseits des Propellers 2 und verhindert, dass das Verbindungskabel 5 beim Betrieb des Unterwasserfahrzeugs in den Propeller gerät. Darüber hinaus ist die Kabelrute 22 biegeelastisch ausgebildet und wirkt dadurch einem unerwünschten Abknicken des Verbindungskabels entgegen, was zu einer Beschädigung des Verbindungskabels 5, insbesondere eines Lichtwellenleiters, führen kann.

Der Schutzschlauch 23 umgibt die Kabelrute 22 unter Ausbildung eines Zwischenraums, durch den das Verbindungskabel 5 geführt ist. Der Schutzschlauch 23 hält dabei das Verbindungskabel 5 fest und stellt einen Kontakt des Verbindungskabels 5 mit der Oberfläche der Kabelrute 22 sicher. Auf diese Weise bildet die Kabelrute 22 bzw. der vom Schutzschlauch 23 überdeckte Abschnitt der Kabelrute 22 eine zugentlastende Kabelaufnahme aus, wobei Zugkräfte im Verbindungskabel 5 durch Reibung zwischen dem Verbindungskabel 5 und der Kabelrute 22 kompensiert werden.

Der Schutzschlauch 23 ist als Spiralschlauch ausgebildet, so dass bei der Montage des Verbindungssystems 14 das Verbindungskabel 5 über ein Aufwickeln des Spiralschlauchs eng an die Kabelrute 22 angelegt werden kann. Der als Spiralschlauch ausgebildete Schutzschlauch 23 ist auch bei langen Verbindungskabeln 5 direkt an dem Endabschnitt des Verbindungskabels 5 montierbar, welches den Stecker 9 trägt.

Bei der Montage des als Spiralschlauch ausgebildeten Schutzschlauchs 23 an der Kabelrute 22 wird beim Anlegen des Schutzschlauchs 23 das Verbindungskabel 5 nicht in einer idealen Geraden eingeschlossen, sondern vielmehr unter Einschluss mehr oder weniger stark ausgebildeter wellenförmiger Abschnitte.

Der als Spiralschlauch ausgebildete Schutzschlauch 23 ist elastisch, wodurch die gleichfalls elastisch ausgebildete Kabelrute 22 seitwärts gerichtete Zugkräfte am Verbindungskabel 5 ausgleichen kann und sich in Richtung des seitwärts wirkenden Zugs biegt. Der Schutzschlauch 23 reicht über ein freies Ende 24 der Kabelrute 22 hinaus. Der über das Ende 24 der Kabelrute 22 hinausragende Abschnitt 25 stabilisiert einerseits das in ihm aufgenommene Verbindungskabel 5 und weist andererseits aufgrund des fehlenden Kerns durch die Kabelrute 22 eine größere Flexibilität auf. Der Schutzschlauch 23 verlängert somit die Kabelrute 22 mit einem flexibleren Abschnitt 25, wodurch ein verbesserter Schutz des empfindlichen Lichtwellenleiters gegen Beschädigungen bei Abknicken am Ende der Kabelrute 22 erreicht ist.

Bei dem dargestellten Verbindungssystem 14 ist zusätzlich zu der zugentlastenden Kabelaufnahme 16 an dem trommelförmig ausgebildeten Gehäuseabschnitt 17 eine weitere Zugentlastung durch die Befestigung des Verbindungskabels 5 an der Kabelrute 22 über den Schutzschlauch 23 gegeben.

Es sind Ausführungsbeispiele möglich, bei denen die hier gezeigten Maßnahmen zur zugentlasteten Aufnahme des Verbindungskabels an der Peripherie des Schutzgehäuses 10 jeweils einzeln vorgesehen sein. Insbesondere ist ein Ausführungsbeispiel vorteilhaft, bei dem eine Zugentlastung über die Befestigung des Verbindungskabels 5 an der Kabelrute 22, ohne die im gezeigten Ausführungsbeispiel vorgesehene Wicklung des Verbindungskabels 5 auf dem trommelförmigen Gehäuseabschnitt, gewährleistet ist. Dabei ist das Verbindungskabel 5 an dem eingespannten Ende der Kabelrute 22 direkt, d.h. ohne die Anordnung zusätzlicher, zur Zugentlastung beitragender Wicklungen 18, durch die Strebe 12 zum Stecker 9 geführt.

Sämtliche in der vorstehenden Beschreibung sowie in den Ansprüchen genannten Merkmale sind erfindungsgemäß sowohl einzeln als auch in beliebiger Kombination miteinander einsetzbar. Die Offenbarung der Erfindung ist daher nicht auf die beschriebenen bzw. beanspruchten Merkmalskombinationen beschränkt. Vielmehr sind alle Kombinationen von Einzelmerkmalen als offenbart zu betrachten.

## Patentansprüche

1. Schutzgehäuse für einen Propeller (2) eines Unterwasserfahrzeugs (1),
**dadurch gekennzeichnet, dass**
an der außerhalb des Arbeitsbereichs des Propellers (2) um eine Propellerachse (3) liegenden Peripherie des Schutzgehäuses (10) eine zugentlastende Kabelaufnahme (16) für ein Verbindungskabel (5) des Unterwasserfahrzeugs (1) angeordnet ist.

2. Schutzgehäuse nach Anspruch 1,
**dadurch gekennzeichnet, dass**
die Kabelaufnahme (16) einen trommelförmig ausgebildeten Gehäuseabschnitt (17) des Schutzgehäuses (10) umfasst, dessen Umfang zur Aufnahme wenigstens einer umlaufenden Wicklung (18) des Verbindungskabels (5) ausgebildet ist.

3. Schutzgehäuse nach Anspruch 2,
**dadurch gekennzeichnet, dass**
die Kabelaufnahme (16) eine den trommelförmig ausgebildeten Gehäuseabschnitt (17) wenigstens teilweise axial überdeckende Axialmanschette (19) umfasst, welche an dem Schutzgehäuse (10) über Klemmeinrichtung befestigt ist.

4. Schutzgehäuse nach Anspruch 3,
**dadurch gekennzeichnet, dass**
die Klemmeinrichtung in das Schutzgehäuse (10) einschraubbare Befestigungsschrauben (20) sind.

5. Schutzgehäuse nach einem der vorhergehenden Ansprüche,
**dadurch gekennzeichnet, dass**
die Peripherie des Schutzgehäuses (10) eine stabförmige Kabelrute (22) umfasst, welche im Wesentlichen parallel zur Propellerachse (3) an dem Schutzgehäuse (10) angeordnet ist.

6. Schutzgehäuse nach Anspruch 5,
**dadurch gekennzeichnet, dass**
die Kabelrute (22) biegeelastisch ausgebildet ist.

7. Schutzgehäuse nach Anspruch 5 oder 6,
**dadurch gekennzeichnet, dass**
die Kabelrute (22) abschnittsweise von einem Schutzschlauch (23) unter Ausbildung eines Zwischenraums zur Durchführung eines Verbindungskabels (5) umgeben ist, wobei die Kabelrute (22) und der Schutzschlauch (23) ein Zugentlastungsmittel bilden.

8. Schutzgehäuse nach Anspruch 7,
**dadurch gekennzeichnet, dass**
der Schutzschlauch (23) als Spiralschlauch ausgebildet ist.

9. Schutzgehäuse nach einem der Ansprüche 5 bis 8,
**dadurch gekennzeichnet, dass**
der Schutzschlauch (23) elastisch ist.

10. Schutzgehäuse nach einem der Ansprüche 7 bis 9,
**dadurch gekennzeichnet, dass**
der Schutzschlauch (23) über ein freies Ende (24) der Kabelrute (22) hinausreicht.

11. Schutzgehäuse nach einem der vorhergehenden Ansprüche,
**dadurch gekennzeichnet, dass**
am Schutzgehäuse (10) axiale Streben (12) ausgebildet sind, welche mit einem auf Höhe der Propellerachse (3) angeordneten Anschlussgehäuse (13) verbunden sind, wobei wenigstens eine der Streben (12) eine Kabelführung (21) aufweist.

12. Verbindungssystem für ein propellergetriebenes Unterwasserfahrzeug (1) mit einem Verbindungskabel (5) und mit einem Schutzgehäuse (10) gemäß einem der Ansprüche 1 bis 11.

13. Verbindungssystem nach Anspruch 12,
**dadurch gekennzeichnet, dass**
das Verbindungskabel (5) auf einem trommelförmig ausgebildeten Gehäuseabschnitt (17) des Schutzgehäuses (10) aufgewickelt ist, wobei Wicklungen (18) des Verbindungskabels (5) mittels einer umlaufenden Axialmanschette (19) auf dem trommelförmig ausgebildeten Gehäuseabschnitt (17) festgeklemmt sind.

14. Verbindungssystem nach Anspruch 12 oder 13, mit einem Schutzgehäuse (10) nach einem der Ansprüche 7 bis 11,
**dadurch gekennzeichnet, dass**
das Verbindungskabel (5) zwischen der Kabelrute (22) und dem Schutzschlauch (23) durchgeführt und radial festgehalten ist.

15. Verwendung eines Schutzgehäuses (10) für einen Propeller (2) eines Unterwasserfahrzeugs (1) zur zugentlasteten Aufnahme eines Verbindungskabels (5) an der Peripherie des Schutzgehäuses (10).
